# EUROPÄISCHE PATENTSCHRIFT

(11) **EP 2 359 986 B1**
(45) Veröffentlichungstag und Bekanntmachung des Hinweises auf die Patenterteilung: **30.03.2016**
(21) Anmeldenummer: 10015462.4
(22) Anmeldetag: 09.12.2010
(51) Int. Cl.: B25F 5/00

(54) **Hand-Werkzeugmaschine mit einem Positionserfassungsmittel für ihre Werkzeugaufnahme**
Manually operated tool machine with a position detection means for its tool holder
Machine-outil manuelle dotée d'un moyen de détection de position pour la réception d'outils

(30) Priorität: 12.02.2010 DE 102010007714
(43) Veröffentlichungstag der Anmeldung: 24.08.2011
(73) Patentinhaber: Festool GmbH, 73240 Wendlingen am Neckar (DE)
(72) Erfinder: Reuß, Torsten, 73265 Dettingen unter Teck (DE)
(74) Vertreter: Patentanwälte Bregenzer und Reule Partnerschaftsgesellschaft mbB

(56) Entgegenhaltungen:
- DE-A1- 19 752 810
- DE-A1-102005 049 130
- DE-A1-102006 005 410
- DE-A1-102008 009 887
- US-A- 5 484 026

## Beschreibung

Die Erfindung betrifft eine Hand-Werkzeugmaschine, insbesondere eine Hubsäge oder einen Exzenterschleifer, gemäß dem Oberbegriff des Anspruchs 1.

Eine derartige Hubsäge in Gestalt einer Stichsäge ist beispielsweise aus DE 10 2008 009 887 A1 bekannt. Der elektrische Motor treibt über ein Getriebe eine Hubstange zu einer linearen Ozillationsbewegung an, so dass ein am vorderen Ende der Stange an einer Werkzeugaufnahme gehaltenes Werkzeug, ein Sägeblatt, eine Auf- und Abbewegung macht, die zum Einsägen in ein Werkstück geeignet ist.

Aus US 5,484,026 geht ein elektrisches Handwerkzeug hervor, dessen Motor mit einer hohen Geschwindigkeit dreht, bis ein ausgestrahlter Strahl in der Nähe einer Referenzposition ist.

Aus DE 10 2006 005 410 A1 geht ein Materialbearbeitungswerkzeug mit motorischem Antrieb hervor, bei dem eine Hilfseinrichtung eine Bearbeitungstiefe oder einen Bearbeitungswinkel misst, was dazu führen kann, dass die Maschine automatisch abschaltet.

Die Hubstange einer üblichen Stichsäge kann in der Regel manuell verstellt werden, um die Werkzeugaufnahme vor das Gehäuse der Hand-Werkzeugmaschine zu bewegen. Dann ist es möglich, die Werkzeugaufnahme beispielsweise mittels eines Spannschlüssels zu lösen, um das Werkzeug auszuwechseln. Eine andere Vorgehensweise sieht vor, dass man den Motor für einen Werkzeugwechsel solange ein- und ausschaltet, bis die Werkzeugaufnahme ausreichend weit vor dem Gehäuse der Hand-Werkzeugmaschine steht, so dass sie betätigbar ist.

Es ist die Aufgabe der vorliegenden Erfindung, die Bedienung einer Hand-Werkzeugmaschine der eingangs genannten Art zu erleichtern.

Zur Lösung der Aufgabe ist eine Hand-Werkzeugmaschine gemäß der technischen Lehre des Anspruchs 1 vorgesehen.

Ein Grundgedanke der Erfindung ist es, dass die Hand-Werkzeugmaschine an einer gewünschten Anhalte-Position der Werkzeugaufnahme anhält, was zu verschiedenen Zwecken nützlich ist, beispielsweise für einen Werkzeugwechsel, für einen Transport der Hand-Werkzeugmaschine oder auch für ein Abstellen derselben. So kann die Anhalte-Position beispielsweise eine für einen Werkzeugwechsel geeignete Werkzeugwechsel-Position der Werkzeugaufnahme sein.

In der Werkzeugwechsel-Position kann z.B. eine Blockierungseinrichtung, insbesondere ein sogenannter Spindelstopp, in Eingriff mit der Werkzeugaufnahme oder einer mit dieser gekoppelten Antriebskomponente gebracht werden, so dass die Werkzeugaufnahme blockierbar ist und ein Werkzeughalter, z.B. eine Schraube oder Mutter, zum Wechsel des Werkzeugs gelöst oder gespannt werden kann.

Es ist also möglich, dass die Anhalte-Position eine für einen Transport der Hand-Werkzeugmaschine, insbesondere dann, wenn an der Werkzeugaufnahme ein Werkzeug montiert ist, geeignete Transport-Position der Werkzeug-Aufnahme ist. So kann beispielsweise vorgesehen sein, dass das Werkzeug möglichst nahe in Richtung des Gehäuses der Hand-Werkzeugmaschine verstellt ist, wenn die Anhalte-Position eingenommen wird. Somit ist die Hand-Werkzeugmaschine möglichst platzsparend zu transportieren, insbesondere dann, wenn ein Werkzeug an der Werkzeugaufnahme montiert ist, beispielsweise ein Sägeblatt, ein Schleifteller oder dergleichen.

Weiterhin ist es möglich, dass die Anhalte-Position eine Abstell-Position der Werkzeugaufnahme ist. In der AbstellPosition kann beispielsweise das Werkzeug so bezüglich des Gehäuses der Hand-Werkzeugmaschine positioniert sein, dass diese mit einem stabilen Stand auf einem Untergrund abstellbar ist.

Es versteht sich, dass bei der Hand-Werkzeugmaschine gemäß der Erfindung mehrere Anhalte-Positionen möglich sind, so dass beispielsweise für einen Werkzeugwechsel und für einen Transport der Hand-Werkzeugmaschine unterschiedliche Anhalte-Positionen der Werkzeugaufnahme vorgesehen sind. Eine bevorzugte Ausführungsform der Erfindung sieht jedoch vor, dass die Anhalte-Position zugleich mindestens zwei der nachfolgenden Positionen realisiert:
Werkzeugwechsel-Position und/oder Abstell-Position und/oder Transport-Position.

Bevorzugt hat die Hand-Werkzeugmaschine eine Betätigungseinrichtung oder ein Betätigungsglied, mit der die Werkzeugaufnahme betätigbar ist. Die Werkzeugaufnahme ist zweckmäßigerweise in der Anhalte-Position, insbesondere der Werkzeugwechsel-Position, in einem Wirkbereich des Betätigungsglieds, das am Gehäuse der Hand-Werkzeugmaschine oder bezüglich des Gehäuses der Hand-Werkzeugmaschine beweglich gelagert ist. Bei dem Betätigungsglied kann es sich beispielsweise um einen Betätigungsschieber, ein Druckelement, beispielsweise in der Art einer Spange oder dergleichen handeln. Mit dem Betätigungsglied ist die Werkzeugaufnahme beispielsweise in eine Lösestellung betätigbar, in der sie das Werkzeug freigibt, so dass es aus der Werkzeugaufnahme entnommen werden kann. Weiterhin ist es möglich, dass das Betätigungsglied die Werkzeugaufnahme in eine Haltestellung verstellt, in der das Werkzeug an der Werkzeugaufnahme festgelegt ist. Es versteht sich, dass das Betätigungsglied beide Betätigungshandlungen vornehmen kann (Verstellen in die Lösestellung und Verstellen in die Haltestellung). Bevorzugt ist die Werkzeugaufnahme jedoch in die Haltestellung federbelastet, wobei in diesem Fall das Betätigungsglied lediglich zum Lösen der Werkzeugaufnahme bzw. zum Verstellen in die Lösestellung vorgesehen ist.

Die Werkzeugaufnahme befindet wich beispielsweise dann im Wirkbereich des Betätigungsglieds, wenn sie in Richtung des Gehäuses verstellt ist, insbesondere maximal weit verstellt ist. Dann taucht die Werkzeugaufnahme beispielsweise in das Gehäuse ein bzw. ist in diesem aufgenommen, so dass das Betätigungsglied wirksam sein kann. Zugleich kann diese Anhalte-Position die Transport-Position sein. Gerade dann ist das Werkzeug möglichst weit in Richtung des Gehäuses verstellt, beispielsweise steht ein Sägeblatt mit geringstmöglicher Ausladung vor das Gehäuse vor, so dass die Hand-Werkzeugmaschine bequem transportierbar ist, beispielsweise in einem Transportkoffer Platz findet.

Die Stabilisierung bzw. stabile Abstell-Position wurde bereits angesprochen. So kann die Stabilisierung z.B. dadurch getroffen worden sein, dass ein mit der Werkzeugaufnahme verbundenes Ausgleichsgewicht in der Anhalte-Position der Werkzeugaufnahme eine die Hand-Werkzeugmaschine stabilisierende Stellung einnimmt. Zum Beispiel ist das Ausgleichsgewicht entgegen einer exzentrischen Position des Werkzeugs angeordnet. Das Ausgleichsgewicht, z.B. ein Exzentergewicht, ist in der Abstell-Position der Werkzeugaufnahme vorzugsweise zu einer freien Seite des Gehäuses hin verstellt. Das Werkzeug nimmt eine dazu entgegengesetzte Position ein, das heißt es ist zum Gehäuse hin verstellt. Das Ausgleichsgewicht wirkt somit beispielsweise als Gegengewicht zu einer Partie der Hand-Werkzeugmaschine, in der der Motor und/oder ein Getriebe angeordnet sind.

Zu einer bequemen Bedienung trägt auch bei, wenn die Werkzeugaufnahme zwischen einer Arbeitsstellung, in der das an der Werkzeugaufnahme montierte Werkzeug an einer Führung, z.B. einer Pendelstütze, Pendelrolle oder dergleichen, geführt ist, und einer Werkzeugwechsel-Stellung verstellbar gelagert ist, in welcher das Werkzeug einen Abstand zu der Führung aufweist. Wenn nämlich das Werkzeug an der Führung anliegt, kann es beispielsweise nicht von der Werkzeugaufnahme entfernt werden, zumindest jedoch nicht ohne besondere Schwierigkeit. Eine bevorzugte Maßnahme sieht in diesem Zusammenhang vor, dass weiterhin eine Halteeinrichtung zum Halten der Werkzeugaufnahme in der Werkzeugwechsel-Stellung vorhanden ist. Die Halteeinrichtung hält die Werkzeugaufnahme in der Werkzeugwechsel-Stellung, bis der Bediener das Werkzeug ausgetauscht hat. Die Halteeinrichtung kann beispielsweise auch durch einen Klemmstift, eine Riegel oder dergleichen gebildet sein oder eine solche Komponente aufweisen. Bevorzugt ist es, wenn eine Rasteinrichtung vorgesehen ist, mit der die Werkzeugaufnahme in der Werkzeugwechsel-Stellung verrastbar ist.

Das erfindungsgemäße Konzept ist bei verschiedenartigen Hand-Werkzeugmaschinen anwendbar, beispielsweise bei Stichsägen, Fräsern, Bohrmaschinen, Schabwerkzeugen, Schleif- und Poliermaschinen und dergleichen. Ferner ist das Konzept bei Elektro-Hand-Werkzeugmaschinen, die durch einen Elektromotor angetrieben werden, sowie auch bei fluidisch, beispielsweise pneumatisch, angetriebenen Hand-Werkzeugmaschinen anwendbar. Das Werkzeug ist vorzugsweise ein Schneidwerkzeug oder ein Trennwerkzeug, beispielsweise ein Sägeblatt, oder auch ein Schleif- oder Polierwerkzeug.

Die Erfassung der Position der Werkzeugaufnahme kann durch geeignete Sensoren erfolgen, die z.B. direkt durch die Werkzeugaufnahme oder das Werkzeug betätigt werden, insbesondere im Bereich des Antriebsstranges, z.B. des Motors oder eines Getriebes. Aber auch andere Größen, beispielsweise eine Beschleunigung des Werkzeugs oder der Werkzeugaufnahme und/oder eine Position des Motors, dessen Energieaufnahme, insbesondere Stromaufnahme, können von den Positionserfassungsmitteln der Position der Werkzeugaufnahme erfasst und somit zur Erzeugung des Positionssignals ausgewertet werden.

Die Positionserfassungsmittel können beispielsweise einen Beschleunigungssensor zum Erfassen einer Beschleunigung, insbesondere einer Oszillationsbeschleunigung, der Hand-Werkzeugmaschine, beispielsweise von deren Werkzeug, umfassen.

Der Beschleunigungssensor kann bei der Werkzeugmaschine eine weitere Funktion erfüllen, nämlich beispielsweise ein "Hüpfen" der Hand-Werkzeugmaschine bei z.B. klemmendem Werkzeug verhindern und den Motor abschalten. Der Sensor ist besonders feinfühlig und kann beispielsweise eine Bewegungsumkehr bei einer Axialbewegung des Werkzeuges erkennen.

Es ist aber auch möglich, einen Antriebssensor vorzusehen, der beispielsweise eine Stellung eines Antriebsteiles, z.B. einer Motorwelle, eines Getriebebauteils oder dergleichen, erfasst, wobei das entsprechend erfasste Antriebsteil mit der Werkzeugaufnahme bewegungsgekoppelt ist. So kann beispieleweise der Antriebssensor durch einen Motorsensor gebildet sein oder einen solchen umfassen, der eine Stellung des Motors umfasst.

In diesem Zusammenhang sei erwähnt, dass die Steuereinrichtung vorteilhaft eine Steuereinrichtung zur Ansteuerung eines elektrisch kommutierten Motors ist, bei dem die entsprechenden Informationen, beispielsweise die Läuferposition, ohnehin zur Bestromung des Motors vorhanden sind. Es versteht sich, dass die Steuereinrichtung auch mit einer solchen, den elektrisch kommutierten Motor ansteuernden Bestromungseinrichtung kommunizieren kann, um das entsprechende Positionssignal zu erhalten. Somit können also die Positionserfassungsmittel beispielsweise durch die Bestromungseinrichtung oder eine von deren Komponenten gebildet sein.

Eine weitere indirekte Größe neben der Beschleunigung ist die Energieaufnahme, beispielsweise Stromaufnahme des Motors, die durch die Positionserfassungsmittel zur Ermittlung der Position eines Läufers des Motors oder auch direkt der Position der Werkzeugaufnahme ausgewertet werden kann. So ist beispielsweise ein Stromsensor vorgesehen, der den Stromverlauf prüft. Beispielsweise hat der Motor bei einem Sägehub eines Sägeblatts einer Hubsäge, bei einer Stichsäge ist das der Aufwärtshub, eine erhöhte Stromaufnahme, während beim Abwärtshub eine geringere Stromaufnahme festgestellt wird. Auf diesem Wege lässt sich sozusagen indirekt die jeweilige Position der Werkzeugaufnahme ermitteln.

Zweckmäßigerweise sind bei den Positionserfassungsmitteln Maßnahmen getroffen, um Störungen zu eliminieren. So kann beispielsweise ein Filter vorgesehen sein, der hochfrequente Schwingungen des Eingangssignales ausfiltert, so dass das Positionssignal die tatsächliche Position der Werkzeugaufnahme mit möglichst wenig oder gar keiner Störung anzeigt. Eine weitere Maßnahme kann vorsehen, dass die Positionserfassungsmittel mehrere aufeinanderfolgende Schwingungen eines Eingangssignales, beispielsweise Schwingungen des Stromsignales oder des Beschleunigungssignales erfassen und auswerten, so dass überlagerte Schwingungen ausgeblendet werden.

Bevorzugt treibt der Motor die Werkzeugaufnahme über ein Getriebe an, das ein festes Übersetzungsverhältnis aufweist. So ist es möglich, dass bereits durch Erfassung einer Bewegung des Motors oder eines sonstigen Antriebsteiles die jeweilige Position der Werkzeugaufnahme ermittelbar ist. Die Positionserfassungsmittel können daher beispielsweise anhand eines Signals, das der Motorsensor anhand einer Stellung des Läufers des Motors ermittelt, das Positionssignal für die Werkzeugaufnahme ermitteln und generieren.

Bevorzugt hat die erfindungsgemäße Hand-Werkzeugmaschine ein Getriebe für eine Umwandlung einer Drehbewegung des Motors in eine oszillierende Axialbewegung des Werkzeugs, beispielsweise eines Sägeblatts, eines Nutenfräsers oder dergleichen. Es ist aber auch möglich, dass die Ozillationsbewegung einen Bestandteil einer Exzenterbewegung ist, bei der die Oszillationsbewegung einer Rotationsbewegung überlagert ist.

Die Steuereinrichtung kann den Motor sozusagen vorausschauend anhalten, indem sie beispielsweise dessen Bestromung derart gestaltet, dass die Werkzeugaufnahme an der vorbestimmten oder einstellbaren Anhalte-Position anhält. Hierzu ist zweckmäßigerweise eine Regelung vorgesehen.

Es ist aber auch möglich, dass die Steuereinrichtung aktiv dazu beiträgt, dass der Motor an der Anhalte-Position anhält. So ist beispielsweise ein aktives Abbremsen des Motors an der Anhalte-Position denkbar. Dies kann beispielsweise eine Kurzschlussbremsung sein. Aber auch eine Gegenbestromung des Motors ist möglich, so dass dieser nicht "über das Ziel hinausschießt", nämlich über die Anhalte-Position.

Eine weitere Variante der Erfindung sieht vor, dass die Steuereinrichtung die Anhalte-Position beispielsweise in einem Schleichgang anfährt. Somit wird also die Anhalte-Position langsam angefahren, was ein exaktes Anhalten ermöglicht.

Eine weitere Variante der Erfindung sieht vor, dass eine Beleuchtungseinrichtung zur Erzeugung von Lichtblitzen, die mit einer Blitzfrequenz aufeinanderfolgen, vorhanden ist. Somit ist ein Arbeitsbereich stroboskopartig beleuchtbar. Die Steuereinrichtung wertet zweckmäßigerweise das Positionssignal aus, um die Blitzfrequenz geeignet einzustellen, so dass beispielsweise stets zum selben Zeitpunkt bzw. bei derselben Position der Werkzeugaufnahme ein Lichtblitz erzeugt wird. Weiterhin sind die Lichtblitze somit auch synchronisierbar, so dass sie beispielsweise bei einem oberen Umkehrpunkt der Oszillationsbewegung erzeugt werden. Auch ein Laufbildmodus ist möglich, bei dem die Lichtblitze mit einem sich zweckmäßigerweise kontinuierlich verändernden Phasenversatz zur Werkzeug-Bewegungsfrequenz erzeugt werden.

Nachfolgend werden Ausführungsbeispiele der Erfindung anhand der Zeichnung erläutert. Es zeigen:

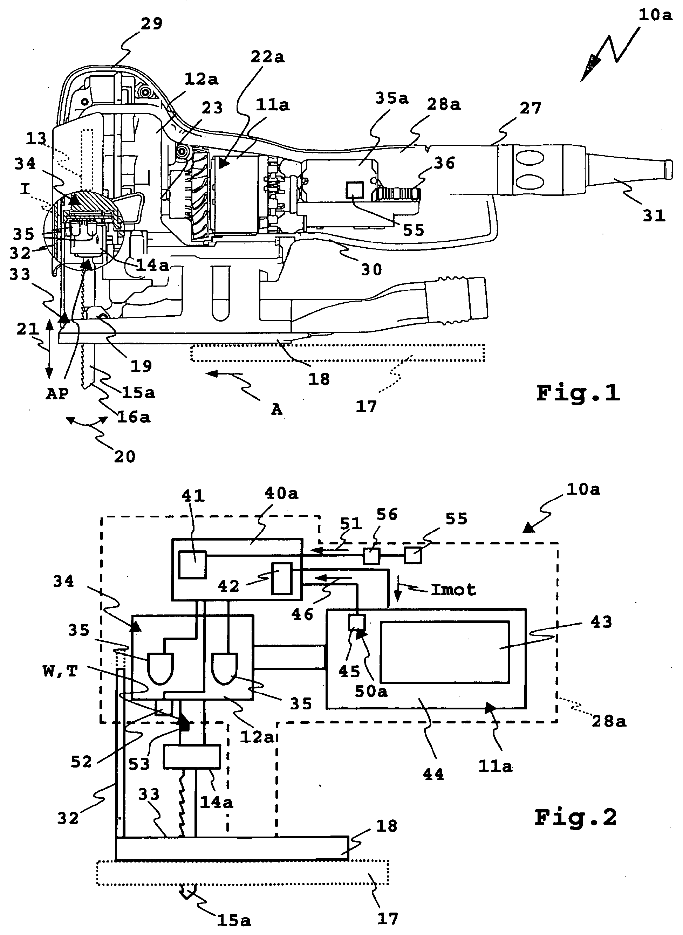

- Fig. 1: eine an einem Ausschnitt I teilweise geschnittene Seitenansicht einer teilweise geschnittenen Hand-Werkzeugmaschine in Gestalt einer Stichsäge,
- Fig. 2: eine schematische Ansicht mit einem elektrischen Blockschaltbild der Hand-Werkzeugmaschine gemäß Fig. 1,
- Fig. 3: ein Diagramm mit einem Stromverlauf eines Motors der Hand-Werkzeugmaschine gemäß Figuren 1, 2 sowie mit einem Positionssignal, das Positionserfassungsmittel dieser Hand-Werkzeugmaschine erzeugen,
- Fig. 4: eine perspektivische Schrägansicht eines Getriebebereichs der Hand-Werkzeugmaschine gemäß Figuren 1, 2 von schräg vorn,
- Fig. 5: das Antriebsteil gemäß Figur 4 von schräg unten,

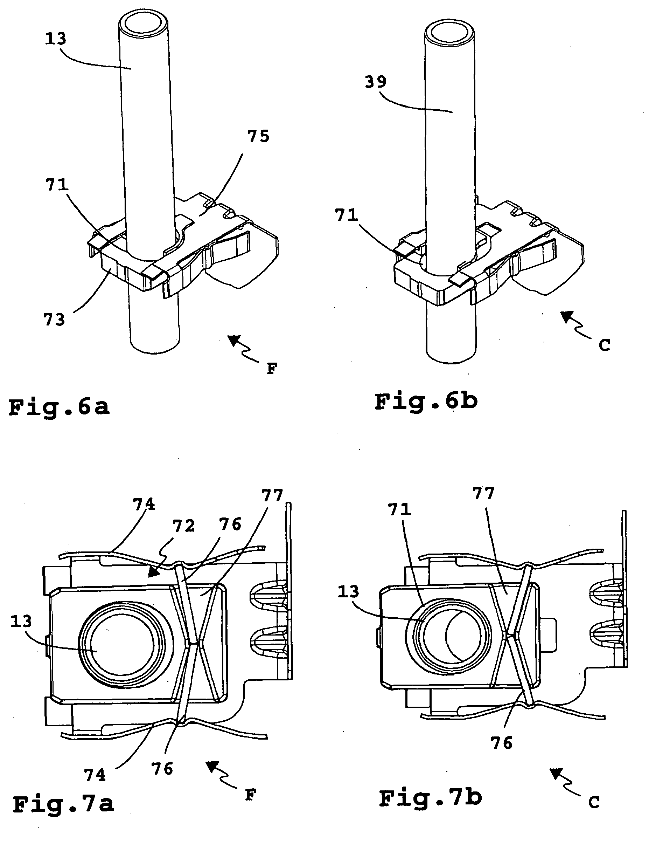

- Fig. 6a, 6b: perspektivische Schrägansichten einer Hubstange sowie einer Halteeinrichtung dafür, der Hand-Werkzeugmaschine gemäß Figuren 1, 2 in einer Arbeitsstellung sowie einer Werkzeugwechsel-Stellung,
- Fig. 7a, 7b: die Anordnung gemäß Figuren 6a, 6b von unten,
- Figur 8: eine geschnittene, teilweise schematisierte Seitenansicht eines zweiten Ausführungsbeispiels der Erfindung in Gestalt einer Säbelsäge,
- Figur 9: eine Werkzeugaufnahme der Säbelsäge gemäß Figur 8 perspektivische schräg und teilweise dargestellt, entsprechend etwa einem Ausschnitt II in Figur 8 und
- Figur 10: eine geschnittene Seitenansicht eines dritten Ausführungsbeispiels der Erfindung in Gestalt eines Exzenterschleifers.

Bei Hand-Werkzeugmaschinen 10a, 10b und 10c sind gleiche oder gleichwirkende Komponenten mit denselben Bezugszeichen versehen, Unterschiede mit Kleinbuchstaben a, b und c kenntlich gemacht.

Bei den Hand-Werkzeugmaschinen 10a, 10b handelt es sich um Hubsägen, nämlich um eine Stichsäge sowie um eine Säbelsäge, während die Hand-Werkzeugmaschine 10c ein Exzenterschleifer oder auch Exzenterpolierer ist. Bei den Hand-Werkzeugmaschinen 10a, 10b, 10c treiben Motoren 11a, 11b und 11c über Getriebe 12a, 12b und 12c Abtriebsteile 13, an deren Ende Werkzeugaufnahmen 14a, 14b, 14c angeordnet sind, zu Oszillationsbewegungen 21 an. An der Werkzeugaufnahme 14a, 14c ist ein Werkzeug 15a, 15c angeordnet. Die Werkzeuge 15a, 15b sind Sägeblätter 16a, 16b. Das Werkzeug 15c ist ein Polier- oder Schleifteller 16c. Mit den Werkzeugen 15a, 15c können Werkstücke 17 bearbeitet werden, nämlich gesägt bzw. poliert oder geschliffen werden.

Das Sägeblatt 16a durchdringt einen Sägetisch 18 und wird durch eine Pendelstütze 19 rückseitig abgestützt. Das Sägeblatt 16a macht also nicht nur eine oszillierende Auf- und Abbewegung, sondern auch eine Pendelbewegung 20 bezüglich einer Arbeitsrichtung A bzw. in Längsrichtung der Hand-Werkzeugmaschine 10a nach vorn und hinten. Die Pendelbewegung 20 wird durch das Getriebe 12a in an sich bekannter Weise realisiert.

Allen Getrieben 12a-12c, die Bestandteile zusätzlich die Motoren 11a-11c enthaltender Antriebe 22a-22c sind, ist es gemeinsam, dass sie eine Rotationsbewegung des Motors 11a-11c in eine Hin- und Herbewegung bzw. die Oszillationsbewegung 21 umwandeln. Dabei ist ein festes Übersetzungsverhältnis gewählt, so dass eine Motorumdrehung des Motors 11a-11c mit einer jeweiligen Oszillation der Oszillationsbewegung 21 korrespondiert. Das Übersetzungsverhältnis zwischen einerseits einer Motorumdrehung des Motors 11a bezüglich eines vollständigen Auf- und Abhubes des Abtriebsteils 13 bei der Hand-Werkzeugmaschine 10a beträgt beispielsweise 4,6 : 1, wobei selbstverständlich andere Übersetzungsverhältnisse möglich sind.

Die Getriebe 12a, 12c sind Winkelgetriebe, das heißt eine Welle 23 des Motors 11a, 11c ist winkelig zum Abtriebsteil 13. Bei der Hand-Werkzeugmaschine 10b hingegen sind die Welle 23 und das Abtriebsteil 13 axial hintereinander angeordnet, beispielsweise koaxial.

Bei der Hand-Werkzeugmaschinen 10c ist die Oszillationsbewegung 21 Teil einer Exzenterbewegung und somit einer Rotationsbewegung 24 überlagert, die durch eine Abtriebsachse 25 erzeugt wird, die ihrerseits wiederum durch die Welle 23 angetrieben wird, z.B. über ein Kegelradgetriebe. Die Abtriebsachse 25 treibt das Abtriebsteil 13 an, dessen Achse jedoch einen Exzenterabstand 26 zur Abtriebsachse 25 aufweist. Dadurch kommt die Exzenterbewegung zu Stande.

Die Motoren 11a, 11c sind jeweils im hinteren Bereich 27 von Gehäusen 28a-28c angeordnet. Die Getriebe 12a, 12c hingegen sind in vorderen Bereichen 29 der Gehäuse 28a-28c angeordnet. Die hinteren Bereiche 27 weisen in an sich bekannter Weise vorteilhaft jeweils noch einen Handgriff 30 auf oder sind als Handgriffe ausgebildet, so dass sie von einem Benutzer bequem ergriffen werden können.

Die Hand-Werkzeugmaschinen 10a-10c sind elektrische Maschinen, wobei das später noch beschriebene Erfindüngsprinzip selbstverständlich auch bei fluidtechnischen Hand-Werkzeugmaschinen anwendbar ist. Die Hand-Werkzeugmaschinen 10a**-**10c werden über elektrische Anschlussleitungen 31 mit Strom versorgt, wobei selbstverständlich auch ein Akku-Betrieb möglich ist.

Weiterhin können Schutzmaßnahmen getroffen sein. Beispielsweise ist bei der Hand-Werkzeugmaschine 10a eine Schutzhaube oder Schutzeinrichtung 32 vorgesehen, die zwischen einer oberen, in Richtung des Gehäuses 28a verstellten Position und einer unteren, einen Arbeitsbereich 33 verdeckenden Position verstellbar ist, um einen Benutzer vor Verletzungen zu schützen.

Der Arbeitsbereich 33 ist durch eine Beleuchtungseinrichtung 34 zweckmäßigerweise beleuchtbar, dessen Leuchtmittel 35 hinter der Schutzeinrichtung 32 angeordnet sind.

Die Motoren 11a, 11c und 11c sind zweckmäßigerweise elektronisch kommutierte Elektro-Motoren. Es ist aber auch möglich, dass es sich bei einem oder mehreren der Motoren 11a, 11b oder 11c um einen Reihenschlussmotor handelt.

Die Motoren 11a**-**11c werden mittels Steuereinrichtungen 40a-40c angesteuert. Die Steuereinrichtungen 40a-40c sorgen für eine Bestromung der Motoren 11a-11c derart, dass der Motor 11a-11c mit einer vorteilhaft, z.B. an einem Drehzahlsteller 36, einstellbaren Drehzahl läuft. Die Werkzeugfrequenz bzw. Betriebsfrequenz der Hand-Werkzeugmaschinen 10a-10c sind verhältnismäßig hoch. So treibt beispielsweise der Motor 11a das Werkzeug 15a mit einer Arbeitsfrequenz von bis zu 58 Hz an, was etwa 3.500 Hüben des Abtriebsteils 13 bzw. der Werkzeugaufnahme 14a pro Sekunde entspricht.

Auch die durch eine Säbelsäge gebildete Hand-Werkzeugmaschine 10b läuft mit verhältnismäßig hoher Arbeitsfrequenz.

Wenn also ein Bediener den Ein- und Ausschalter loslässt, würde an sich eine konventionelle Hand-Werkzeugmaschine bei einer zufälligen Position der jeweiligen Werkzeugaufnahme anhalten.

Dadurch würde beispielsweise ein Werkzeugwechsel des Werkzeugs 15a, 15b erschwert oder gar unmöglich gemacht.

Weiterhin können die Sägeblätter 16a oder 16b im Prinzip recht weit vor die Gehäuse 28a, 28b vorstehen, was bei einem Transport der Hand-Werkzeugmaschinen 10a oder 10b aufgrund des hohen Platzbedarfes ungünstig ist. Beispielsweise passen die Hand-Werkzeugmaschinen 10a oder 10b dann nicht in einen Transportkoffer, weil das Sägeblatt 16a, 16b zu viel Platz benötigt.

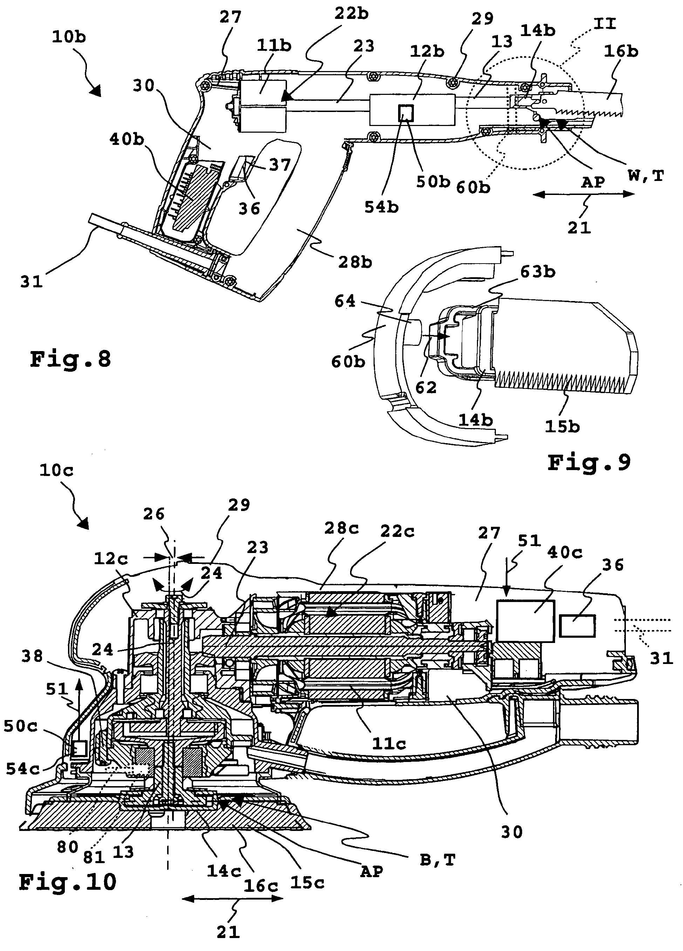

Auch ein Abstellen der Hand-Werkzeugmaschine 10c auf einem Untergrund kann erschwert sein, wenn der Schleifteller 16c die in Figur 10 gestrichelt eingezeichnete Position einnimmt und nicht die in durchgezogenen Linien eingezeichnete Position. Dann kippt die Hand-Werkzeugmaschine 10c in Richtung des hinteren Bereiches 27 des Gehäuses 28c, weil dort der verhältnismäßig schwere Motor 11c untergebracht ist.

Die Steuereinrichtungen 40a-40c schaffen dagegen Abhilfe, in dem sie in Zusammenwirkung mit Positionserfassungsmitteln 50a-50c jeweilige Positionen der Werkzeugaufnahme 14a-14c ermitteln und den jeweiligen Motor 11a-11c an einer vorbestimmten oder einstellbaren Anhalte-Position AP der Werkzeugaufnahme 14a-14c in Abhängigkeit eines von den Positionserfassungsmittel 50a-50c erzeugten Positionssignals 51 anhalten.

Die Erzeugung bzw. Bildung des Positionssignals 51 geschieht dabei auf unterschiedliche Weisen, von denen nachfolgend exemplarisch einige aufgeführt sind:
Die Steuereinrichtungen 40a-40c steuern die Motoren 11a, 11b und 11c. Die Steuereinrichtung 40a weist beispielsweise zu diesem Zweck einen Mikroprozessor 41 auf. Desweiteren umfasst die Steuereinrichtung 40a eine Bestromungseinrichtung 42 zur Bestromung des Motors 11a, insbesondere dessen Stators 44. Die Bestromungseinrichtung 42 bildet vorliegend einen Bestandteil der Steuereinrichtung 40a, wobei auch eine zweikomponentige bzw. getrennte Bauweise möglich ist, das heißt dass eine Steuereinrichtung eine entsprechende Bestromungseinrichtung ansteuert.

Damit Erregerspulen (nicht dargestellt) des Stators 44 mit geeigneten Motorströmen bestromt werden können, von denen ein Motorstrom Imot exemplarisch dargestellt ist, ist mindestens ein Motorsensor 45 zur Erzeugung eines Motorstellungssignals 46 vorgesehen.

Da nun der Motor 11a über das Getriebe 12a eine feste Bewegungskopplung mit der Werkzeugaufnahme 14a aufweist (4, 6 Umdrehungen entsprechen einem Auf- und Abwärtshub), ermittelt die Steuereinrichtung 40a z.B. anhand des Motorstellungssignals 46 eine jeweilige Position der Werkzeugaufnahme 14a.

Der Motorsensor 45 ist beispielsweise ein magnetischer Sensor (Hall-Sensor oder dergleichen) und erfasst beispielsweise das Magnetfeld des Läufers 43.

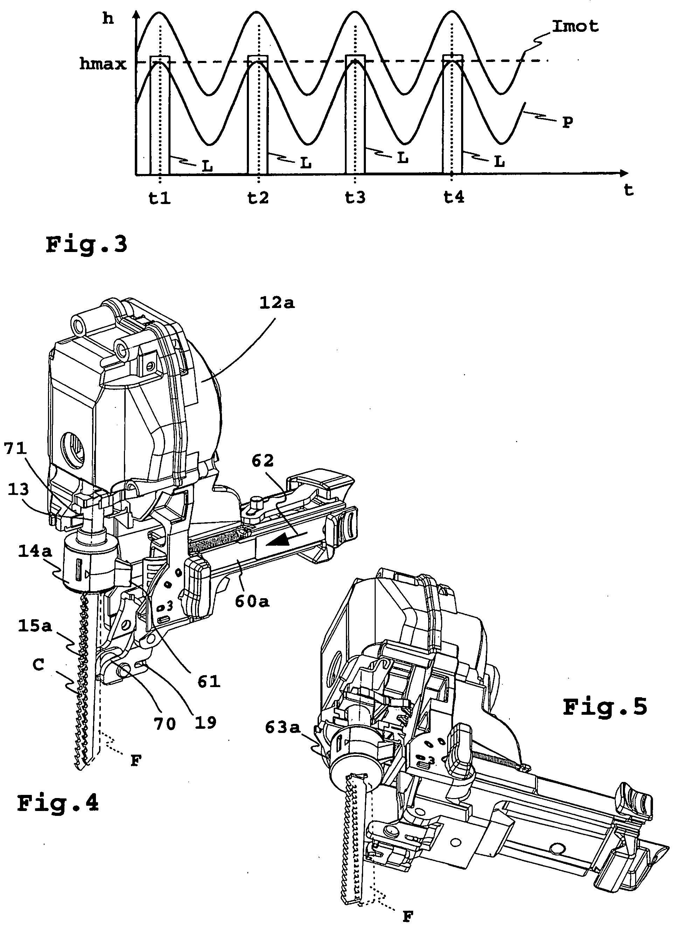

Die Bestromungseinrichtung 42 erzeugt den Motorstrom Imot zur Bestromung der Erregerwicklungen des Stators 44. Anhand der Stromhöhe des Stromes Imot kann die Bestromungseinrichtung 42 eine Drehzahl des Motors 11a und zudem auch eine jeweilige Position der Werkzeugaufnahme 14a, zumindest ungefähr ermitteln. Beispielsweise ist der Kraftaufwand und somit die Stromaufnahme Imot des Motors 11a bei einem Sägehub des Werkzeugs 15a größer als bei einem Rückfahr- oder Leerhub. Der Sägehub ist vorliegend der Aufwärtshub bei dem Zähne am Sägeblatt 16a in das Werkstück 17 einsägen, wobei die Zähne in Richtung des Gehäuse 28a orientiert sind. Ab dem oberen Umkehrpunkt hmax hingegen, bei dem das Werkzeug 15a vom Gehäuse 28a weg bewegt wird, nimmt die Stromaufnahme des Motors 11a ab. Das ist in dem Diagramm gemäß Figur 3 ersichtlich. Eine jeweilige Position P der Werkzeugaufnahme 14a korreliert also mit dem Motorstrom Imot. Zu Zeitpunkten t1-t4 hat die Werkzeugaufnahme 14a ihren Maximalhub hmax, was mit den oberen Umkehrpunkten des Motorstromes Imot korreliert.

Es versteht sich, dass anstelle der Stellung des Motors 11a bzw. dessen Läufers 43 auch unmittelbar eine Stellung der Werkzeugaufnahme 14a durch die Positionserfassungsmittel 50a erfasst werden können. Beispielsweise kann ein Werkzeugsensor 52a vorgesehen sein, der unmittelbar eine Position der Werkzeugaufnahme 14a erfasst. Der Werkzeugsensor 52 sensiert beispielsweise eine Markierung 53 an der Werkzeugaufnahme 14a. Der Werkzeugsensor 52 ist beispielsweise ein magnetischer Sensor oder ein optischer Sensor, der auf die magnetische oder optische Markierung 53 sensibel reagiert. Die Steuereinrichtung 40a erhält von dem Werkzeugsensor 52 am oberen Umkehrpunkt hmax jeweils ein Werkzeug-Positionssignal.

Bei den Hand-Werkzeugmaschinen 10b und 10c ist ebenfalls ein unmittelbares Messkonzept realisiert, wobei allerdings dort nicht die Werkzeugaufnahme 14b oder 14c sensorisch erfasst wird, sondern eine andere Antriebskomponente, was aufgrund der unmittelbaren Kopplung des Motors 11b, 11c mit der Werkzeugaufnahme 14b, 14c, jedenfalls in einem festen Übersetzungsverhältnis, ohne weiteres möglich ist.

So hat die Hand-Werkzeugmaschinen 10b beispielsweise einen Antriebssensor 54b als Bestandteil der Positionserfassungsmittel 50b, der eine jeweilige Stellung des Getriebes 12b erfasst, beispielsweise die Stellung eines Zahnrades, einer Hubstange oder dergleichen. Der Antriebssensor 54b ist zweckmäßigerweise ein magnetischer Sensor, beispielsweise ein AMR- oder GMR-Sensor, ein Hall-Sensor oder dergleichen.

Auch ein Antriebssensor 54c der Positionserfassungsmittel 50c der Hand-Werkzeugmaschinen 10c arbeitet zweckmäßigerweise magnetisch. Er erfasst die Position eines Ausgleichsgewichts 38, das an dem Abtriebsteil 13 angeordnet ist. Das Ausgleichsgewicht 38 wirkt entgegen der Exzentrität. So erkennt man beispielsweise in Figur 10, dass das Ausgleichsgewicht 38 bezüglich der Abtriebsachse 25 entgegengesetzt zur jeweils äußeren Position des Werkzeugs 15c ist. Das Ausgleichsgewicht 38 ist beispielsweise vom hinteren Bereich 27 des Gehäuses 28c wegverstellt, das heißt es befindet sich nahe der freien Seite des vorderen Bereiches 29, wohingegen die Scheibe bzw. der Schleif- oder Polierteller 16c in Richtung des hinteren Bereiches 27 verstellt ist.

Diese Position des Werkzeugs 15c eignete sich optimal zum Abstellen der Hand-Werkzeugmaschine 10c auf einem Untergrund, weil dann die Gewichtsverhältnisse gut ausbalanciert sind. Dann ist eine Anhalte-Position AP der Werkzeugaufnahme 14c zugleich eine Abstell-Position B. Man erkennt zudem in Figur 10, dass in der Abstell-Position B das Werkzeug 15c nicht vor die freie Seite des vorderen Bereiches 29 vorsteht, so dass die Hand-Werkzeugmaschine 10c äußerst wenig Platz beansprucht. Die Anhalte-Position AP entspricht somit auch einer Transport-Position T.

Weiterhin ist diese Anhalte-Position AP für einen Werkzeugwechsel geeignet, da dann ein Blockierteil 80, z.B. ein Bolzen, in Eingriff mit dem Abtriebsteil 13, z.B. mit einer am Abtriebsteil 13 vorgesehenen Aufnahme 81 gebracht werden kann, um das Abtriebsteil 13 zu blockieren (in der Funktion eines sogenannten Spindelstopps).

Bei den Hand-Werkzeugmaschinen 10a, 10b hingegen ist die Anhalte-Position AP der Werkzeugaufnahme 14a, 14b die dem Maximalhub hmax entsprechende Position, das heißt diejenige Position, bei der ein Wechsel des Werkzeuges 15a, 15b möglich ist, was unten noch näher erläutert wird. Ferner entspricht die Werkzeugwechsel-Position W der Werkzeugaufnahme 14a, 14b zugleich der Transport-Position T, da nämlich dann das Werkzeug 15a, 15b im geringstmöglichen Umfang vor das Gehäuse 28a, 28b vorsteht, was ein Verstauen der Hand-Werkzeugmaschine 10a, 10b in einem Behälter erleichtert.

Bei der Hand-Werkzeugmaschine 10a ist als weiteres Ausführungsbeispiel für eine Positionserfassung der Werkzeugaufnahme 14a die Nutzung eines Beschleunigungssensors 55 vorgesehen. Der Beschleunigungssensors 55 hat unter anderem die Funktion, ein sogenanntes "Hüpfen" der Hand-Werkzeugmaschine 10a zu verhindern, das heißt wenn das Sägeblatt 16a im Werkstück 17 klemmt, wird eine dadurch verursachte schnelle Beschleunigung des Gehäuses 28a bezüglich des Werkstücks 17 vom Beschleunigungssensor 55 erfasst und an die Steuereinrichtung 40a gemeldet, so dass diese unverzüglich den Motor 11a abschaltet. Der Beschleunigungssensor 55 ist jedoch so sensibel, dass er auch eine beim Sägen des Werkstücks 17 erzeugte Linearbeschleunigung des Gehäuses 28a relativ zum Werkstück 17 erfasst, die beim axialen Auf- und Abbewegen des Werkzeuges 15a erzeugt wird. Auf diesem Wege erfasst also der Beschleunigungssensor 55 beispielsweise den oberen Umkehrpunkt hmax, der zugleich der Anhalte-Position AP der Werkzeugaufnahme 14a entspricht. Dann kehrt nämlich die Beschleunigungsrichtung der Werkzeugaufnahme 14a um. Zweckmäßigerweise ist dem Beschleunigungssensor 55 ein Filter 56 nachgeschaltet, das auch einen Bestandteil des Beschleunigungssensors 55 bilden kann, um verhältnismäßig hochfrequente, durch den Antriebsstrang der Hand-Werkzeugmaschine 10a verursachte Schwingungen auszufiltern. So werden z.B. durch die Pendelbewegung 20 verursachte Schwingungen durch das Filter 56 ausgefiltert.

Somit "kennt" also die Steuereinrichtung 40a-40c die jeweilige Position P der Werkzeugaufnahme 14a-14c, um diese an der beispielsweise vorbestimmten Anhalte-Position AP anzuhalten, wenn ein Bediener beispielsweise den Motorschalter 37 loslässt.

Die den elektronisch kommutierten Motor 11a ansteuernde Steuereinrichtung 40a kann diesen beispielsweise dadurch an die Anhalte-Position AP sozusagen "anfahren", dass sie die Drehzahl verringert, so dass die Werkzeugaufnahme 14a nicht über das Ziel der Anhalte-Position AP hinausschießt.

Es ist aber auch möglich, dass die Steuereinrichtung 40a eine Regelung oder eine vorrausschauende Steuerung umfasst dergestalt, dass sie unter Berücksichtigung einer jeweiligen Trägheit der abtriebsseitigen Bestandteile des Antriebs 22a die Bestromung des Motors 11a stoppt, derart, dass dieser an der Anhalte-Position AP anhält.

Weiterhin ist es vorteilhaft, wenn die Steuereinrichtung 40a eine Gegenbestromung oder Bremsbestromung durchführt derart, dass der Motor 11a so anhält, dass die Werkzeugaufnahme 14a die Anhalte-Position AP beim Ausschalten der Hand-Werkzeugmaschine 10a sozusagen automatisch einnimmt.

An dieser Stelle sei bemerkt, dass selbstverständlich zur Einstellung der Anhalte-Position AP ein separater Betriebsschalter vorgesehen sein könnte, auch wenn das bei den Hand-Werkzeugmaschinen 10a oder 10b oder 10c nicht realisiert ist.

Jedenfalls synchronisiert bzw. ermittelt die jeweilige Hand-Werkzeugmaschine 10a-10c im laufenden Betrieb die jeweilige Position P der Werkzeugaufnahme 14a-14c, so dass auch dann die Anhalte-Position AP angefahren oder angesteuert werden kann, wenn ein Bediener beispielsweise manuell zuvor die Position der Werkzeugaufnahme 14a-14c verstellt hat.

Bei den Motoren 11b, 11c kann es sich auch um sogenannte Universalmotoren oder auch Reihenschlussmotoren handeln. Bevorzugt ist es dann, dass die Steuereinrichtung 40b oder 40c den Motor 11b und 11c sozusagen im Schleichgang in Richtung der Anhalte-Position AP fährt.

Es ist möglich, dass die Steuereinrichtung 40b oder 40c durch eine bestimmte Bediensequenz, beispielsweise durch kurzzeitiges, mehrfaches Drücken des Motorschalters 37, und/oder durch eine vorbestimmte Betätigungshandlung, z.B. kurzes oder langes Andrücken in geringerem Umfang als zum Anlaufen der Hand-Werkzeugmaschine 10b, 10c ansonsten erforderlich, einen Befehl dazu erhält, die Anhalte-Position AP anzufahren.

Ferner kann ein separates Bedienelement, beispielsweise ein elektrischer Schalter (nicht dargestellt) vorgesehen sein, um der Steuereinrichtung 40a-40c einen Befehl zu geben, die Anhalte-Position AP anzufahren.

Der Bediener kann bei beiden obigen Methoden gezielt die Anhalte-Position AP anfahren und die Bewegung des Werkzeugs 15a-15c sozusagen optisch kontrollieren, wenn er die Hand-Werkzeugmaschine 10a- 10c zur Ansteuerung der Anhalte-Position AP anweist. Bevorzugt ist es jedoch, dass die jeweilige Hand-Werkzeugmaschine 10a-10c sozusagen automatisch bei einem jeweiligen Ausschalten die Anhalte-Position AP anfährt.

Bei den als Universalmotoren ausgestalten Motoren 11b, 11c ist auch eine Kurzschlussbremsung denkbar. Weiterhin ist es zweckmäßig, dass die Hand-Werkzeugmaschinen 10a, 10b und 10c im Schleichgang bzw. mit geringer Drehzahl die Anhalte-Position AP anfahren, was die Verletzungsgefahr verringert.

Die Steuereinrichtung 40a realisiert zudem noch eine Zusatzfunktion: sie steuert die Beleuchtungseinrichtung 34 zu Erzeugung von Lichtblitzen an. Am jeweiligen oberen Umkehrpunkt hmax, das heißt zu den Zeitpunkten t1, t2, t3 und t4 erzeugen die Leuchtmittel 35 Lichtblitze L, so dass ein stroboskopartiger Effekt entsteht.

In der Werkzeugwechsel-Position W befinden sich die Werkzeugaufnahmen 14a, 14b im Bereich von Betätigungsgliedern 60a, 60b, mit denen die Werkzeugaufnahmen 14a, 14b von einer das Werkzeug 15a, 15b festlegenden Haltestellung in eine dieses freigebende Freigabestellung verstellbar sind. Das Betätigungsglied 60a ist beispielsweise als eine Art Schieber ausgestaltet, dessen freies Ende auf einen Betätigungsvorsprung 61 der Werkzeugaufnahme 14a wirkt. Wenn das Betätigungsglied 60a, das axial verschieblich bezüglich des Gehäuses 28a gelagert ist, in Richtung der Lösestellung betätigt, das heißt in Richtung eines Pfeils 62 verschoben wird, bewirkt das freie Ende des Betätigungsglieds 60a, das auf den Betätigungsvorsprung 61 wirkt, ein Verdrehen desselben, wodurch das Werkzeug 15a freikommt. Somit ist es also vorteilhaft, dass die Hand-Werkzeugmaschine 10a sozusagen selbsttätig die Anhalte-Position AP, die zugleich die Werkzeugwechsel-Position W der Werkzeugaufnahme 14a ist, anfährt.

Ein ähnliches Prinzip ist bei der Hand-Werkzeugmaschine 10b realisiert, bei der das Betätigungsglied 60b ebenfalls beweglich bezüglich des Gehäuses 28b gelagert ist. Das Betätigungsglied 60b hat in Seitenansicht eine U-förmige Gestalt mit einem Betätigungsvorsprung 64, der bei Betätigung des Betätigungsgliedes 60b auf ein Löseglied 63b der Werkzeugaufnahme 14b wirkt (in Richtung eines Pfeils 62). Wenn das Löseglied 63b in Richtung des Pfeils 62 verstellt ist, kommt das Werkzeug 15b frei und kann aus der Werkzeugaufnahme 14b entnommen werden. In umgekehrter Richtung ist das Löseglied 63b ebenso wie das ringförmige Löseglied 63a der Werkzeugaufnahme 14a federbelastet, das heißt die Werkzeugaufnahme 14a, 14b nimmt automatisch ihre Haltestellung zum Festlegen und Halten des Werkzeugs 15a, 15b ein.

Das Werkzeug 15a in Gestalt des Sägeblatts 16a ist an einer Führung 70 geführt, beispielsweise der Pendelstütze 19. Weiterhin ist das Abtriebsteil 13, z.B. eine Hubstange 39, an einem oberhalb der Werkzeugaufnahme 14a angeordneten Lager 71 axial geführt. Die Hubstange 39 durchdringt ein Lagerstück 73, das das Lager 71 bereitstellt. Das Lagerstück 73 ist vorliegend plattenartig ausgestaltet. Zu erwähnen ist noch, dass das Lager 71 ein Langloch umfasst, um die Pendelbewegung 20 zu ermöglichen.

Wenn das Werkzeug 15a an der Führung 70 anliegt, ist es nur schwer auszuwechseln. Hier schafft die folgende Maßnahme Abhilfe. Die Werkzeugaufnahme 14a und somit auch das an ihr angebrachte Werkzeug 15a können zwischen einer Führungs- oder Arbeitsstellung F und einer Werkzeugwechsel-Stellung C verstellt werden, wobei in der Werkzeugwechsel-Stellung C das Werkzeug 15a einen Abstand zur Führung 70 aufweist, in der Führungs- oder Arbeitsstellung F hingegen an der Führung 70 anliegt, was in den Figuren 4 und 5 gestrichelt dargestellt ist.

Das Lager 71 kann zwischen den Positionen C und F verstellt werden, wobei zum Halten des Lagers 71 in der Arbeitsstellung F oder der Werkzeugwechsel-Stellung C eine Rasteinrichtung 72, mithin also eine Halteeinrichtung, vorgesehen ist.

Das Lagerstück 73 ist zwischen den Stellungen C und F verschieblich. Das Lagerstück 73 ist an einer Führungsplatte 75 verschieblich gelagert, von der seitlich Führungs- oder Federspangen 74 abstehen. Die Federspangen 74 und die Führungsplatte 75 sind zueinander winkelig und bilden insgesamt etwa die Gestalt eines U.

Zwischen den Federspangen 74 sind Halteglieder 76 gehalten, die mit einer Stirnseite an den Haltegliedern 76 und mit einer dieser entgegengesetzten Stirnseite aneinander anstoßen und in eine X-förmige Ausnehmung 77 am Lagerstück 73 eingreifen. In der Ausnehmung 77 stoßen die beiden Halteglieder 76, die beispielsweise in der Gestalt von Plättchen ausgestaltet sind, aneinander, zweckmäßigerweise im Bereich einer schmalsten Stelle der Ausnehmung 77. Wenn also das Lagerstück 73 axial verstellt wird, nimmt es die aneinander angrenzenden Enden der Halteglieder 76 mit, so dass diese von der einen bistabilen Lage entsprechend der Werkzeugwechsel-Stellung C in die andere bistabile Lage entsprechend der Arbeitsstellung F sozusagen klappen. In jeder der beiden Stellungen C und F halten die Halteglieder 76 das Lagerstück 73.

## Patentansprüche

1. Hand-Werkzeugmaschine (10a-10c), insbesondere Hubsäge oder Exzenterschleifer, mit einem Gehäuse (28a-28c), mit einer Werkzeugaufnahme (14a-14c) zum Aufnehmen eines Werkzeugs (15a-15c) und einem einen Motor (11a-11c) aufweisenden Antrieb (22a-22c) zum Antreiben der Werkzeugaufnahme (14a-14c) zu einer Oszillationsbewegung (21) und/oder einer Rotationsbewegung (24) bezüglich des Gehäuses (28a-28c), und einer Steuereinrichtung (40a-40c) zur Steuerung des Antriebs (22a-22c), wobei sie Positionserfassungsmittel (50a-50c) zur Erzeugung eines Positionssignals (51) in Abhängigkeit von mindestens einer Position (P) der Werkzeugaufnahme (14a-14c) relativ zu dem Gehäuse (28a-28c) aufweist, **dadurch gekennzeichnet, dass** die Steuereinrichtung (40a-40c) zum Anhalten des Motors (11a-11c) an einer vorbestimmten oder einstellbaren Anhalte-Position (AP) der Werkzeugaufnahme (14a-14c) relativ zu dem Gehäuse (28a-28c) in Abhängigkeit von dem Positionssignal (51) ausgestaltet ist.

2. Hand-Werkzeugmaschine nach Anspruch 1, **dadurch gekennzeichnet, dass** die Anhalte-Position (AP) eine für einen Werkzeugwechsel geeignete Werkzeugwechsel-Position (W) der Werkzeugaufnahme (14a-14c) ist.

3. Hand-Werkzeugmaschine nach Anspruch 1 oder 2, **dadurch gekennzeichnet, dass** die Werkzeugaufnahme (14a, 14b) in der Anhalte-Position (AP) in einem Wirkbereich eines am Gehäuse (28a, 28b) beweglich gelagerten Betätigungsglieds (60a, 60b) zum Betätigen der Werkzeugaufnahme (14a, 14b) positioniert ist, so dass die Werkzeugaufnahme (14a, 14b) durch das Betätigungsglied (60a, 60b) in eine das Werkzeug (15a, 15b) freigebende Lösestellung und/oder eine das Werkzeug (15a, 15b) an der Werkzeugaufnahme (14a, 14b) festlegende Haltestellung verstellbar ist.

4. Hand-Werkzeugmaschine nach einem der vorhergehenden Ansprüche, **dadurch gekennzeichnet, dass** die Anhalte-Position (AP) eine für einen Transport der Werkzeugmaschine, insbesondere mit an der Werkzeugaufnahme (14a-14c) montiertem Werkzeug (15a-15c), geeignete Transport-Position (T) der Werkzeugaufnahme (14a-14c) und/oder eine für ein Abstellen der Werkzeugmaschine, insbesondere mit an der Werkzeugaufnahme (14a-14c) montiertem Werkzeug (15a-15c), geeignete Abstell-Position (B) der Werkzeugaufnahme (14a-14c) ist.

5. Hand-Werkzeugmaschine nach einem der vorhergehenden Ansprüche, **dadurch gekennzeichnet, dass** ein mit der Werkzeugaufnahme (14a-14c) verbundenes Ausgleichsgewicht (38) in der Anhalte-Position (AP) der Werkzeugaufnahme (14a-14c) eine die Hand-Werkzeugmaschine (10a-10c) stabilisierende Stellung einnimmt, insbesondere entgegen einer exzentrischen Position des Werkzeugs (15a-15c) angeordnet ist.

6. Hand-Werkzeugmaschine nach einem der vorhergehenden Ansprüche, **dadurch gekennzeichnet, dass** die Werkzeugaufnahme (14a-14c) zwischen einer Arbeitsstellung (F), in der das an der Werkzeugaufnahme (14a-14c) montierte Werkzeug (15a-15c) an einer Führung (70), insbesondere einer Pendelstütze (19), geführt ist, und einer Werkzeugwechsel-Stellung (C) verstellbar gelagert ist, in der das Werkzeug (15a-15c) einen Abstand zu der Führung (70) aufweist, und dass sie eine Halteeinrichtung zum Halten der Werkzeugaufnahme (14a-14c) in der Werkzeugwechsel-Stellung (C), insbesondere eine Rasteinrichtung (72) zum Verrasten der Werkzeugaufnahme (14a-14c) in der Werkzeugwechsel-Stellung (C), aufweist.

7. Hand-Werkzeugmaschine nach einem der vorhergehenden Ansprüche, **dadurch gekennzeichnet, dass** die Positionserfassungsmittel (50a-50c) einen Beschleunigungssensor (55) zum Erfassen einer Beschleunigung der Hand-Werkzeugmaschine (10a-10c), insbesondere des Werkzeugs (15a-15c) und/oder einen durch das Werkzeug (15a-15c) oder die Werkzeugaufnahme (14a-14c) betätigbaren Werkzeugsensor (52), insbesondere einen optischen Sensor, einen magnetischen Sensor, und/oder mindestens einen Antriebssensor, insbesondere einen Motorsensor (45), zur Erfassung eines das Werkzeug (15a-15c) antreibenden Antriebsteils, insbesondere des Motors (11a-11c), umfassen.

8. Hand-Werkzeugmaschine nach einem der vorhergehenden Ansprüche, **dadurch gekennzeichnet, dass** die Positionserfassungsmittel (50a-50c) zur Ermittlung einer Drehzahl und/oder einer Position eines Läufers (43) des Motors (11a-11c) und/oder der Werkzeugaufnahme (14a-14c) anhand eines Verlaufs einer Energieaufnahme, insbesondere einer Stromaufnahme, des Motors (11a-11c) ausgestaltet sind.

9. Hand-Werkzeugmaschine nach einem der vorhergehenden Ansprüche, **dadurch gekennzeichnet, dass** die Positionserfassungsmittel (50a-50c) zur Eliminierung von Störungen bei der Ermittlung der Position (P) der Werkzeugaufnahme (14a-14c) mehrere aufeinander folgende Schwingungen eines Eingangssignals, das insbesondere von einer Energieaufnahme des Motors (11a-11c) oder einer Beschleunigung der Werkzeugaufnahme (14a-14c) abhängt, auswerten.

10. Hand-Werkzeugmaschine nach einem der vorhergehenden Ansprüche, **dadurch gekennzeichnet, dass** der Antrieb (22a-22c) ein Getriebe (12a-12c) umfasst, über das der Motor (11a-11c) die Werkzeugaufnahme (14a-14c) in einem festen Übersetzungsverhältnis antreibt.

11. Hand-Werkzeugmaschine nach einem der vorhergehenden Ansprüche, **dadurch gekennzeichnet, dass** die Werkzeugaufnahme (14a-14c) exzentrisch bezüglich des Gehäuses (28a-28c) gelagert ist und die Oszillationsbewegung (21) einen Bestandteil einer Exzenterbewegung ist, bei der die Oszillationsbewegung (21) der Rotationsbewegung (24) überlagert ist.

12. Hand-Werkzeugmaschine (10a-10c) nach einem der vorhergehenden Ansprüche, **dadurch gekennzeichnet, dass** die Steuereinrichtung (40a-40c) zum Abbremsen des Motors (11a-11c) in die Anhalte-Position (AP) der Werkzeugaufnahme (14a-14c) und/oder zum Anfahren der Anhalte-Position (AP) in einem Schleichgang ausgestaltet ist.

13. Hand-Werkzeugmaschine (10a-10c) nach einem der vorhergehenden Ansprüche, **dadurch gekennzeichnet, dass** die Steuereinrichtung (40a-40c) zum Ansteuern einer Beleuchtungseinrichtung (34) zur Erzeugung von mit einer Blitzfrequenz aufeinander folgenden Lichtblitzen (L) zu einer stroboskopartigen Beleuchtung eines Arbeitsbereichs (33) in Abhängigkeit von dem Positionssignal (51) ausgestaltet ist.

## Claims

1. Hand-operated power tool (10a-10c), in particular hacksaw or eccentric grinder, with a casing (28a-28c), with a tool holder (14a-14c) for holding a tool (15a-15c), and a drive (22a-22c) with a motor (11a-11c) for driving the tool holder (14a-14c) to make an oscillating movement (21) and/or a rotation movement (24) relative to the casing (28a-28c), and a control unit (40a-40c) for controlling the drive (22a-22c), wherein it has position detection means (50a-50c) for generating a position signal (51) depending on at least one position (P) of the tool holder (14a-14c) relative to the casing (28a-28c), **characterised in that** the control unit (40a-40c) is designed to stop the motor (11a-11c) at a predetermined or settable stopping position (AP) of the tool holder (14a-14c) relative to the casing (28a-28c), depending on the position signal (51).

2. Hand-operated power tool according to claim 1, **characterised in that** the stopping position (AP) is a tool change position (W) of the tool holder (14a-14c) which is suitable for tool changeover.

3. Hand-operated power tool according to claim 1 or 2, **characterised in that** the tool holder (14a, 14b) in the stopping position (AP) is positioned in an effective zone of an actuating element (60a, 60b) for actuation of the tool holder (14a, 14b), movably mounted on the casing (28a, 28b), so that the tool holder (14a, 14b) may be shifted by the actuating element (60a, 60b) into a release position which releases the tool (15a, 15b) and/or a holding position fixing the tool (15a, 15b) in the tool holder (14a, 14b).

4. Hand-operated power tool according to any of the preceding claims, **characterised in that** the stopping position (AP) is a transport position (T) of the tool holder (14a-14c) suitable for transport of the power tool, in particular with the tool (15a-15c) mounted on the tool holder (14a-14c), and/or a storage position (B) of the tool holder (14a-14c) for storage of the power tool, in particular with the tool (15a-15c) mounted on the tool holder (14a-14c).

5. Hand-operated power tool according to any of the preceding claims, **characterised in that** a counterbalance weight (38) connected to the tool holder (14a-14c) adopts a position stabilising the hand-operated power tool (10a-10c) in the stopping position (AP) of the tool holder (14a-14c), and in particular is provided opposite an eccentric position of the tool (15a-15c).

6. Hand-operated power tool according to any of the preceding claims, **characterised in that** the tool holder (14a-14c) is mounted adjustably between an operating position (F) in which the tool (15a-15c) mounted on the tool holder (14a-14c) is guided on a guide (70), in particular a floating support (19), and a tool change position (C) in which the tool (15a-15c) has clearance from the guide (70), and that it has a holding device to hold the tool holder (14a-14c) in the tool change position (C), in particular a latching device (72) for locking the tool holder (14a-14c) in the tool change position (C).

7. Hand-operated power tool according to any of the preceding claims, **characterised in that** the position detection means (50a-50c) include an acceleration sensor (55) to detect acceleration of the hand-operated power tool (10a-10c), in particular of the tool (15a-15c) and/or a tool sensor (52) which may be actuated by the tool (15a-15c) or the tool holder (14a-14c), in particular an optical sensor, a magnetic sensor, and/or at least one drive sensor, in particular a motor sensor (45), for detecting a drive member, in particular the motor (11a-11c), driving the tool (15a-15c).

8. Hand-operated power tool according to any of the preceding claims, **characterised in that** the position detection means (50a-50c) are designed to determine a speed and/or a position of a rotor (43) of the motor (11a-11c) and/or the tool holder (14a-14c) with the aid of a pattern of energy consumption, in particular power consumption, of the motor (11a-11c).

9. Hand-operated power tool according to any of the preceding claims, **characterised in that** the position detection means (50a-50c), to eliminate faults in determining the position (P) of the tool holder (14a-14c), evaluate several consecutive oscillations of an input signal, which depends in particular on an energy consumption of the motor (11a-11c) or an acceleration of the tool holder (14a-14c).

10. Hand-operated power tool according to any of the preceding claims, **characterised in that** the drive (22a-22c) includes a gearing (12a-12c), through which the motor (11a-11c) drives the tool holder (14a-14c) in a fixed transmission ratio.

11. Hand-operated power tool according to any of the preceding claims, **characterised in that** the tool holder (14a-14c) is mounted eccentrically relative to the casing (28a-28c), and the oscillating movement (21) is part of an eccentric movement, in which the oscillating movement (21) is superimposed on the rotation movement (24).

12. Hand-operated power tool (10a-10c) according to any of the preceding claims, **characterised in that** the control unit (40a-40c) is designed to brake the motor (11a-11c) in the stopping position (AP) of the tool holder (14a-14c) and/or to move from the stopping position (AP) into a creep feed.

13. Hand-operated power tool (10a-10c) according to any of the preceding claims, **characterised in that** the control unit (40a-40c) is designed to drive a lighting device (34) to generate consecutive flashes of light (L) with a flash frequency for stroboscopic illumination of a work area (33) depending on the position signal (51).

## Revendications

1. Machine-outil manuelle (10a - 10c), en particulier scie à mouvement alternatif ou ponceuse excentrique, comprenant un boîtier (28a - 28c), un logement d'outil (14a - 14c) servant à recevoir un outil (15a - 15c) et un entraînement (22a - 22c) présentant un moteur (11 a - 11 c) servant à entraîner le logement d'outil (14a - 14c) aux fins d'un mouvement d'oscillation (21) et/ou d'un mouvement de rotation (24) par rapport au boîtier (28a - 28c), et un système de commande (40a - 40c) servant à commander l'entraînement (22a - 22c), sachant qu'il présente des moyens de détection de position (50a - 50c) servant à produire un signal de position (51) en fonction d'au moins une position (P) du logement d'outil (14a - 14c) par rapport au boîtier (28a -28c), **caractérisée en ce que** le système de commande (40a - 40c) est configuré afin d'arrêter le moteur (11a - 11 c) au niveau d'une position d'arrêt (AP) prédéterminée ou pouvant être réglée du logement d'outil (14a - 14c) par rapport au boîtier (28a - 28c) en fonction du signal de position (51).

2. Machine-outil manuelle selon la revendication 1, **caractérisée en ce que** la position d'arrêt (AP) est une position de changement d'outil (W), adaptée en vue d'un changement d'outil, du logement d'outil (14a - 14c).

3. Machine-outil manuelle selon la revendication 1 ou 2, **caractérisée en ce que** le logement d'outil (14a, 14b) est positionné, dans la position d'arrêt (AP), dans une zone active d'un organe d'actionnement (60a, 60b) monté de manière mobile au niveau du boîtier (28a, 28b) servant à actionner le logement d'outil (14a, 14b) de sorte que le logement d'outil (14a, 14b) peut être déplacé dans une position de déblocage libérant l'outil (15a, 15b) et/ou dans une position de retenue bloquant l'outil (15a, 15b) au niveau du logement d'outil (14a, 14b) par l'actionnement de l'organe d'actionnement (60a, 60b).

4. Machine-outil manuelle selon l'une quelconque des revendications précédentes, **caractérisée en ce que** la position d'arrêt (AP) est une position de transport (T), adaptée en vue d'un transport de la machine-outil, en particulier dotée d'un outil (15a - 15c) monté au niveau du logement d'outil (14a - 14c), du logement d'outil (14a - 14c) et/ou une position de débrayage (B), adaptée en vue d'un débrayage de la machine-outil, en particulier dotée d'un outil (15a - 15c) monté au niveau du logement d'outil (14a - 14c), du logement d'outil (14a - 14c).

5. Machine-outil manuelle selon l'une quelconque des revendications précédentes, **caractérisée en ce qu'**un contrepoids (38) relié au logement d'outil (14a 14c) adopte, dans la position d'arrêt (AP) du logement d'outil (14a - 14c), une position stabilisant la machine-outil manuelle (10a - 10c), en particulier est disposé dans le sens inverse d'une position excentrique de l'outil (15a - 15c).

6. Machine-outil manuelle selon l'une quelconque des revendications précédentes, **caractérisée en ce que** le logement d'outil (14a - 14c) est monté de manière à pouvoir être déplacé entre une position de travail (F), dans laquelle l'outil (15a - 15c) monté au niveau du logement d'outil (14a - 14c) est guidé au niveau d'un système de guidage (70), en particulier d'un support pendulaire (19), et une position de changement d'outil (C), dans laquelle l'outil (15a - 15c) présente une distance par rapport au système de guidage (70), et **en ce qu'**il présente un système de retenue servant à retenir le logement d'outil (14a - 14c) dans la position de changement d'outil (C), en particulier un système d'enclenchement (72) servant à enclencher le logement d'outil (14a -14c) dans la position de changement d'outil (C).

7. Machine-outil manuelle selon l'une quelconque des revendications précédentes, **caractérisée en ce que** les moyens de détection de position (50a- 50c) comprennent un capteur d'accélération (55) servant à détecter une accélération de la machine-outil manuelle (10a - 10c), en particulier de l'outil (15a - 15c), et/ou un capteur d'outil (52) pouvant être actionné par l'outil (15a - 15c) ou le logement d'outil (14a - 14c), en particulier un capteur optique, un capteur magnétique et/ou au moins un capteur d'entraînement, en particulier un capteur de moteur (45), servant à détecter une partie d'entraînement entraînant l'outil (15a - 15c), en particulier du moteur (11a- 11c).

8. Machine-outil manuelle selon l'une quelconque des revendications précédentes, **caractérisée en ce que** les moyens de détection de position (50a - 50c) sont configurés afin de déterminer une vitesse de rotation et/ou une position d'un induit (43) du moteur (11a - 11 c) et/ou du logement d'outil (14a - 14c) à l'aide d'une évolution d'une consommation d'énergie, en particulier d'une consommation de courant, du moteur (11 a - 11 c).

9. Machine-outil manuelle selon l'une quelconque des revendications précédentes, **caractérisée en ce que** les moyens de détection de position (50a - 50c) évaluent, aux fins de l'élimination de perturbations lors de la détermination de la position (P) du logement d'outil (14a - 14c), plusieurs vibrations consécutives d'un signal d'entrée, qui dépend en particulier d'une consommation d'énergie du moteur (11a - 11c) ou d'une accélération du logement d'outil (14a - 14c).

10. Machine-outil manuelle selon l'une quelconque des revendications précédentes, **caractérisée en ce que** l'entraînement (22a - 22c) comprend une transmission (12a - 12c), par l'intermédiaire de laquelle le moteur (11 a - 11 c) entraîne le logement d'outil (14a - 14c) selon un rapport de multiplication fixe.

11. Machine-outil manuelle selon l'une quelconque des revendications précédentes, **caractérisée en ce que** le logement d'outil (14a - 14c) est monté de manière excentrique par rapport au boîtier (28a - 28c), et **en ce que** le mouvement d'oscillation (21) est une composante d'un mouvement excentrique, dans le cadre duquel le mouvement d'oscillation (21) est superposé au mouvement de rotation (24).

12. Machine-outil manuelle (10a - 10c) selon l'une quelconque des revendications précédentes, **caractérisée en ce que** le système de commande (40a - 40c) est configuré aux fins du ralentissement du moteur (11a - 11 c) dans la position d'arrêt (AP) du logement d'outil (14a - 14c) et/ou aux fins du passage de la position d'arrêt (AP) dans une vitesse lente.

13. Machine-outil manuelle (10a - 10c) selon l'une quelconque des revendications précédentes, **caractérisée en ce que** le système de commande (40a - 40c) est configuré aux fins du pilotage d'un dispositif d'éclairage (34) servant à produire des flashs (L) consécutifs à une fréquence de flash pour former un éclairage stroboscopique d'une zone de travail (33) en fonction du signal de position (51).
